# EUROPEAN PATENT SPECIFICATION

(11) **EP 3 435 705 B1**
(45) Date of publication and mention of the grant of the patent: **31.03.2021**
(21) Application number: 17183238.9
(22) Date of filing: 26.07.2017
(51) Int. Cl.: H04W 40/36, H04W 36/02

(54) **COMMUNICATION RELAY AND METHOD FOR REDIRECTING DATA PACKETS**
KOMMUNIKATIONSRELAIS UND VERFAHREN ZUR UMLEITUNG VON DATENPAKETEN
RELAIS DE COMMUNICATION ET PROCÉDÉ DE REDIRECTION DE PAQUETS DE DONNÉES

(43) Date of publication of application: 30.01.2019
(73) Proprietor: NTT DoCoMo, Inc., Tokyo 100-6150 (JP)
(72) Inventor: MUTIKAINEN, Jari, 80687 Munich (DE); GUERZONI, Riccardo, 80687 Munich (DE); ALI, Irfan, Palo Alto, CA 94306 (US)
(74) Representative: Viering, Jentschura & Partner mbB Patent- und Rechtsanwälte

(56) References cited:
- EP-A1- 2 375 815
- US-B1- 8 406 764
- SAMSUNG: "TS 23.502: Updates to Inter NG-RAN Node HO Procedure (Section 4.9.1.2.2)", 3GPP DRAFT; S2-173348_S2_121_N2HOUPD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Hangzhou, China; 20170515 - 20170519 9 May 2017 (2017-05-09), XP051268798, Retrieved from the Internet: URL:http://www.3gpp.org/ftp/tsg_sa/WG2_Arc h/TSGS2_121_Hangzhou/Docs/ [retrieved on 2017-05-09]
- HUAWEI ET AL: "TS 23.502: Handling PDU sessions rejected by RAN during handover", 3GPP DRAFT; S2-173138_TS 23.502_HANDLING PDU SESSION REJECTED BY RAN DURING HANDOVER_V3, 3RD GENERATION PARTNERSHIP PROJECT (3GPP), MOBILE COMPETENCE CENTRE ; 650, ROUTE DES LUCIOLES ; F-06921 SOPHIA- , vol. SA WG2, no. Hangzhou; 20170515 - 20170519 9 May 2017 (2017-05-09), XP051268605, Retrieved from the Internet: URL:http://www.3gpp.org/ftp/tsg_sa/WG2_Arc h/TSGS2_121_Hangzhou/Docs/ [retrieved on 2017-05-09]
- "3rd Generation Partnership Project; Technical Specification Group Services and System Aspects; Procedures for the 5G System; Stage 2 (Release 15)", 3GPP DRAFT; 23502-050_RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. ;20170701 14 July 2017 (2017-07-14), XP051309199, Retrieved from the Internet: URL:http://www.3gpp.org/ftp/tsg_sa/WG2_Arc h/Latest_SA2_Specs/Latest_draft_S2_Specs/ [retrieved on 2017-07-14]
- ZTE ET AL: "TS 23.502 New N2 based intra AMF inter NG-RAN node handover procedure", 3GPP DRAFT; S2-175294 TS23502 N2 HANDOVER PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. SAN JOSE DEL CABO, MEXICO; 20170603 - 20170626 3 July 2017 (2017-07-03), XP051310262, Retrieved from the Internet: URL:http://www.3gpp.org/ftp/tsg_sa/WG2_Arc h/TSGS2_122_Cabo/Docs/ [retrieved on 2017-07-03]
- CATT: "Handover consideration for 5G", 3GPP DRAFT; S2-171048, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Dubrovnik, Croatia; 20170213 - 20170217 13 February 2017 (2017-02-13), XP051217170, Retrieved from the Internet: URL:http://www.3gpp.org/ftp/Meetings_3GPP_ SYNC/SA2/Docs/ [retrieved on 2017-02-13]
- QUALCOMM INCORPORATED: "Level of data forwarding in handover", 3GPP DRAFT; R3-172427 DATA FORWARDING IN HANDOVER V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Qingdao, China; 20170727 - 20170729 26 June 2017 (2017-06-26), XP051302369, Retrieved from the Internet: URL:http://www.3gpp.org/ftp/Meetings_3GPP_ SYNC/RAN3/Docs/ [retrieved on 2017-06-26]

## Description

The present disclosure relates to communication relays and methods for redirecting data packets.

In case of a handover of a mobile communication terminal, a source base station may still be provided with downlink data even if the mobile communication terminal is no longer to be served by the source base station. Therefore, the source base station typically needs to forward the downlink data to the target base station. However, there may be scenarios where there is no direct interface between source base station and the target base station and therefore the source base station needs to forward the downlink data via a relay, e.g. of a core network of the mobile communication network. Accordingly, efficient approaches for relaying (or redirecting) of downlink data are desirable. Some prior art is represented by the following document: SAMSUNG: "TS 23.502: Updates to Inter NG-RAN Node HO Procedure (Section 4.9.1.2.2)", 3GPP DRAFT, S2-173348.

The invention is set out by the appended independent claims while preferred embodiments are set out by the appended dependent claims.

According to one independent claim, a communication relay is provided comprising a transmitter for transmitting data packets, which comprises user data to be transmitted to a mobile communication terminal, to a first network component of a mobile communication network, a receiver configured to receive a data packet from the first network component, wherein the data packet comprises user data to be transmitted to the mobile communication terminal and an indication that the user data of the data packet is to be forwarded to a second network component for a handover of the mobile terminal from the first network component to the second network component; and a controller configured to, in response to the reception of the data packet from the first network component, stop the transmitter from transmitting data packets, which comprise user data to be transmitted to the mobile communication terminal, to the first network component and to control the transmitter to forward the user data of the data packet received from the first network component to the second network component and to control the transmitter to start transmitting data packets, which comprise user data to be transmitted to the mobile communication terminal, to the second network component, wherein the communication relay is a user plane function and wherein the indication is a tunnel endpoint identifier.

According to another independent claim, a method for redirecting data packets according to the communication relay described above is provided.

Various examples are described below:
A communication relay includes: a transmitter for transmitting data packets, which include user data to be transmitted to a mobile communication terminal, to a first network component of a mobile communication network; a receiver configured to receive a data packet from the first network component, wherein the data packet includes user data to be transmitted to the mobile communication terminal and an indication that the user data of the data packet is to be forwarded to a second network component for a handover of the mobile communication terminal from the first network component to the second network component; and a controller configured to, in response to the reception of the data packet from the first network component, stop the transmitter from transmitting data packets, which include user data to be transmitted to the mobile communication terminal, to the first network component; and to control the transmitter to forward the user data of the data packet received from the first network component to the second network component; and to control the transmitter to start transmitting data packets, which include user data to be transmitted to the mobile communication terminal, to the second network component, wherein the communication relay is a user plane function and wherein the indication is a tunnel endpoint identifier. The communication relay mentioned in this paragraph provides a first example.

Forwarding the user data of the data packet may optionally include extracting the user data to be transmitted to the first network component from the data packet, to generate a forwarding data packet including the user data and to transmit the forwarding data packet to the second network component. The features mentioned in this paragraph in combination with the first example provide a second example.

The receiver may optionally be configured to receive the data packet from the first network component via a first communication tunnel and the received data packet may optionally include an identifier of an end point of the first tunnel in the communication relay. The features mentioned in this paragraph in combination with the first example or with the second example provide a third example.

The controller may optionally be configured to control the transmitter to forward the user data by means of a second tunnel. The features mentioned in this paragraph in combination with the second example or with the third example provide a fourth example.

The indication of the second network component may optionally be an identification of the endpoint of the second tunnel. The features mentioned in this paragraph in combination with the fourth example provide a fifth example.

The receiver may optionally be configured to receive the data packet from the first network component via the GTP-U protocol. The features mentioned in this paragraph in combination with any of the examples one to five provide a sixth example.

The first network component may optionally be a first radio access network component and the second network component may optionally be a second radio access network component and the second radio access network component may optionally be the target of the handover of the mobile communication terminal. The features mentioned in this paragraph in combination with any of the examples one to six provide a seventh example.

The first network component may optionally be a first user plane function to be removed and the second network component may optionally be a radio access network component or a second user plane function. The features mentioned in this paragraph in combination with any of the examples one to six provide an eighth example.

The controller may optionally be configured to perform the controlling of the transmitter based on control instructions received from a control plane component of the mobile communication network. The features mentioned in this paragraph in combination with any of the examples one to eight provide a ninth example.

The controller may optionally be configured to, after stopping the transmitter from transmitting data packets to the first network component, control a memory of the communication relay to start buffering data packets to be transmitted to the mobile communication terminal received by the communication relay. The features mentioned in this paragraph in combination with any of the examples one to nine provide a tenth example.

The controller may optionally be configured to control the transmitter to start transmitting the buffered data packets to the second network component in response to a corresponding command from a control plane component including the address of the second network component based on the address of the second network component. The features mentioned in this paragraph in combination with the tenth example provide an eleventh example.

A method for redirecting data packets, performed by a user plane function acting as communication relay, includes: transmitting data packets, which include user data to be transmitted to a mobile communication terminal, to a first network component of a mobile communication network; receiving a data packet from the first network component, wherein the data packet includes user data to be transmitted to the mobile communication terminal and an indication that the user data of the data packet is to be forwarded to a second network component for a handover of the mobile communication terminal from the first network component to the second network component; in response to the reception of the data packet from the first network component, stopping transmitting data packets, which include user data to be transmitted to the mobile communication terminal, to the first network component; and forwarding the user data of the data packet received from the first network component to the second network component; and start transmitting data packets, which include user data to be transmitted to the mobile communication terminal, to the second network component and wherein the indication is a tunnel endpoint identifier. The method mentioned in this paragraph provides a twelfth example.

Forwarding the user data of the data packet may optionally include extracting the user data to be transmitted to the first network component from the data packet, to generate a forwarding data packet including the user data and to transmit the forwarding data packet to the second network component. The features mentioned in this paragraph in combination with the twelfth example provide a thirteenth example.

The method may optionally include receiving the data packet from the first network component via a first communication tunnel at a communication relay and the received data packet may optionally include an indication of the communication relay as tunnel end point identifier of the first tunnel in the communication relay. The features mentioned in this paragraph in combination with the twelfth example or with the thirteenth example provide a fourteenth example.

The method may optionally include forwarding the user data by means of a second tunnel. The features mentioned in this paragraph in combination with the thirteenth example or with the fourteenth example provide a fifteenth example.

The indication of the second network component may optionally be an identification of the endpoint of the second tunnel. The features mentioned in this paragraph in combination with the fifteenth example provide a sixteenth example.

The method may optionally include receiving the data packet from the first network component via the GTP-U protocol. The features mentioned in this paragraph in combination with any of the examples twelve to sixteen provide a seventeenth example.

The first network component may optionally be a first radio access network component and the second network component may optionally be a second radio access network component and the second radio access network component may optionally be the target of the handover of the mobile communication terminal. The features mentioned in this paragraph in combination with any of the examples twelve to seventeen provide an eighteenth example.

The first network component may optionally be a first user plane function to be removed and the second network component may optionally be a radio access network component or a second user plane function. The features mentioned in this paragraph in combination with any of the examples twelve to seventeen provide an nineteenth example.

The method may optionally include receiving control instructions from a control plane component of the mobile communication network and performing the stopping, forwarding and starting based on the control instructions. The features mentioned in this paragraph in combination with any of the examples twelve to nineteen provide a twentieth example.

The method may optionally include after stopping transmitting data packets to the first network component, starting buffering data packets to be transmitted to the mobile communication terminal received. The features mentioned in this paragraph in combination with any of the examples twelve to twenty provide a twenty-first example. The method may optionally include starting transmitting the buffered data packets to the second network component in response to a corresponding command from a control plane component including the address of the second network component based on the address of the second network component. The features mentioned in this paragraph in combination with the twenty-first example provide a twenty-second example.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system according to a 5G architecture.
- Figure 2: illustrates a redirection of downlink packets for a handover in a 5G communication system according to an embodiment.
- Figure 3: illustrates packet redirection using GTP-U packets.
- Figure 4: shows a message according to a GTP-U format for a redirected PDU.
- Figure 5: shows an example for a redirection with buffering in the source RAN component and the target RAN component.
- Figure 6: shows an example for a redirection with buffering in the source RAN component, the target RAN component and the UPF.
- Figure 7: shows an example for a redirection with buffering in the source RAN component and the UPF.
- Figure 8: shows an example for a redirection of DL packets in case of an I-UPF removal.
- Figure 9: shows an example for a redirection of DL packets in case of an I-UPF relocation.
- Figure 10: shows a communication relay.
- Figure 11: shows a flow diagram illustrating a method for redirecting data packets.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In an LTE (Long Term Evolution) communication system, an S1-based handover is needed whenever an X2-based handover cannot be used. This may be because of lack of connectivity between the source base station and the target base station (i.e. an X2 interface is not deployed between the source base station and the target base station) or a corresponding core network element (MME (mobility management entity)) needs to be relocated.

In a 5G communication network the equivalent of an S1-based handover is an N2-based handover.

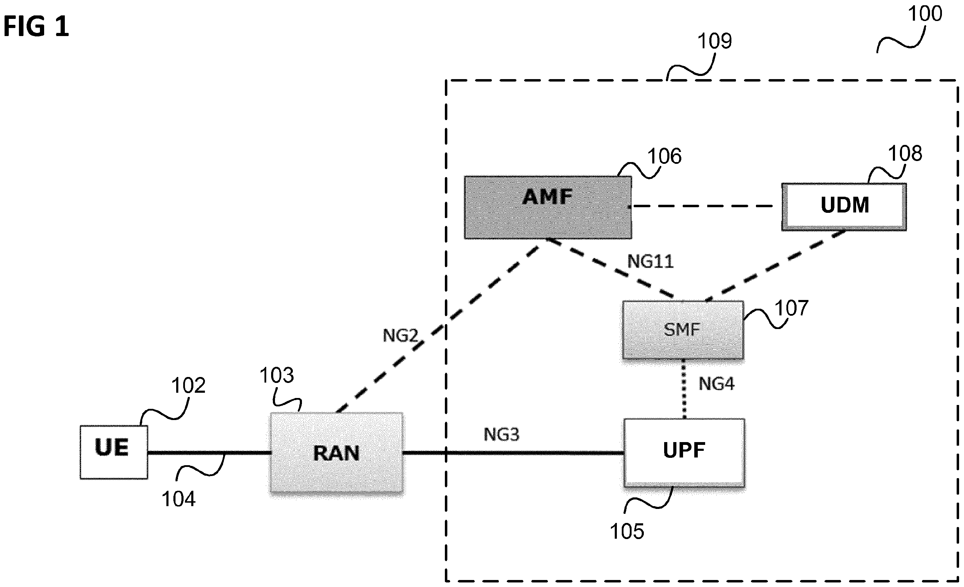

Figure 1 shows a radio communication system 100 according to a 5G architecture.

The radio communication system 100 includes a radio communication terminal device 102 such as a UE (user equipment), a nano equipment (NE), and the like.

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the radio communication terminal device 102 over an air interface 104. It should be noted that the radio access network 103 may include any number of radio access network nodes.

The radio communication system 100 may further include a core network 109 including a UPF (user plane function) 105, connected to the RAN 103, an Access and Mobility Management Function (AMF) 106 connected to the RAN 103, a Session Management Function (SMF) 107 and a Unified Data Management (UDM) 108.

Due to the separation between Mobility Management functionalities, located in the AMF 106, and Session Management, located in the SMF 107, the N2 based handover involves signalling between AMF 106 and the SMF 107 in the 5G core network (5GC) 109. If multiple PDU sessions are involved, the AMF 106 needs to send a PDU handover request to each SMF 107 and wait for a response until it proceeds with the handover execution. This causes delay in the handover preparation phase, and may cause handover failure, as radio coverage may be lost during the waiting period.

This issue may be addressed by avoiding obtaining a SM (session management) context from the SMF 107 during the handover preparation phase. However, when direct data forwarding in the RAN 103 is not possible, an indirect data forwarding tunnel establishment still requires the AMF 106 to contact each involved SMF 107 during the handover preparation phase which again causes delay.

In the following, approaches are described which allow improving the handover success rate in N2 based handovers in a 5G communication system by simplifying the preparation phase. This includes, according to various embodiments, a redirection operation in the user plane which the source RAN component (e.g. source base station) can use to control the redirection of the user plane from the CN to the target RAN component (e.g. target base station).

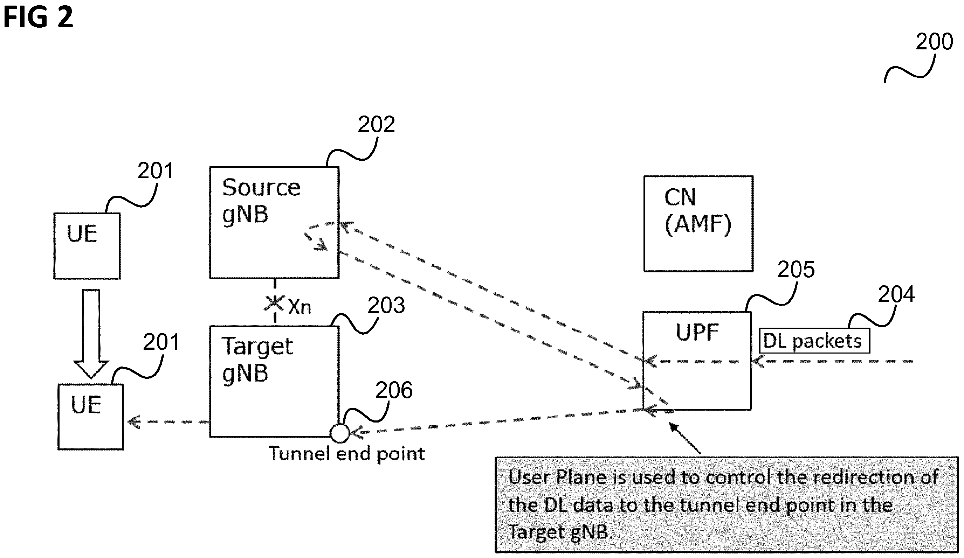

Figure 2 illustrates a redirection of downlink packets for a handover in a 5G communication system according to an embodiment.

A mobile terminal 201 (e.g. corresponding to UE 102) moves from the coverage area of a source base station 202 to the coverage area of a target base station 203. The base stations 202, 203 are for example part of RAN 103. It is assumed that there is no Xn interface present between the base stations 202, 203.

Therefore, downlink (DL) data packets 204, i.e. packets of data to be transmitted to the mobile terminal 201, arriving at a UPF 205 and transmitted to the source base station 202 are redirected by the source base station 202 to the target base station 203 via the UPF 205. According to various embodiments, the user plane is used to control the redirection of the DL data from the source base station 202 to the tunnel end point 206 in the target base station 203. The source base station 202 receives an indication of the tunnel end point 206 from the target base station 203, e.g. in the handover response received via the core network (AMF) from the target base station 203.

Thus, the SMF 107 does not need to be involved in the handover preparation phase to establish the forwarding tunnels between the source base station 202, the target base station 203 and the UPF 205. After the handover execution phase, the SMF 107 is updated with the new tunnel information of the target base station 203. At this point the SMF 107 can remove or relocate the UPF 105 if needed.

For the tunnel between the source base station 202 and the target base station 203 and the UPF 205, the GPRS (General Packet Radio Service) Tunnelling Protocol User data (GTP-U) tunnelling protocol may be used.

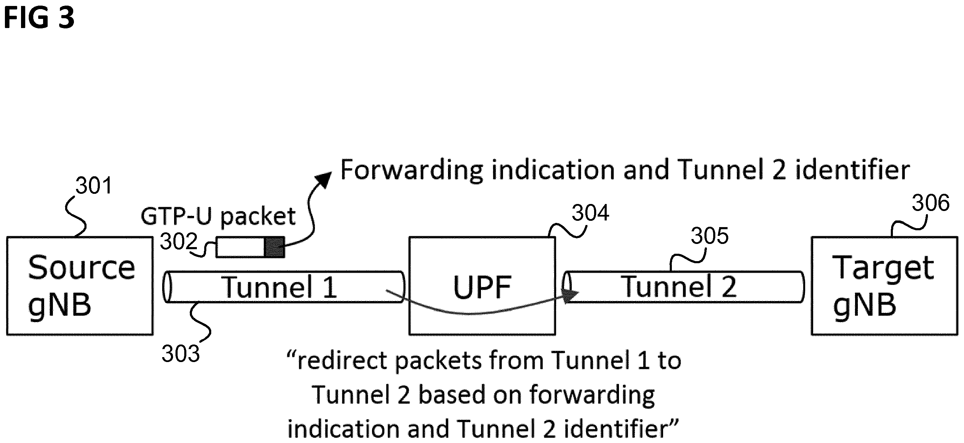

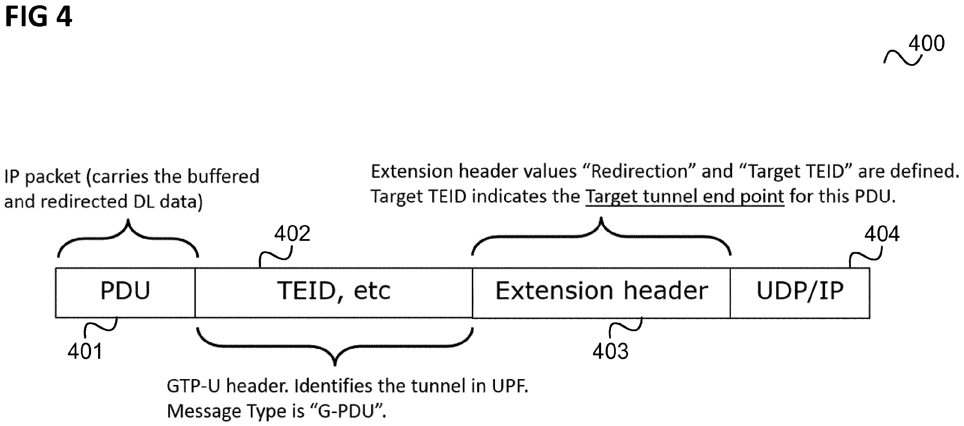

Furthermore, according to various embodiments, the GTP-U protocol is extended to indicate a redirection or redirection endpoint of a PDU (packet data unit). This is illustrated in Figures 3 and 4.

Figure 3 illustrates packet redirection using GTP-U packets.

A source base station 301, for example corresponding to source base station 202, redirects a DL packet by means of a GTP-U packet 302 via a first tunnel 303 to a UPF 304, for example corresponding to UPF 205. The GTP-U packet 302 comprises a forwarding indication (i.e. an indication that the GTP-U packet 302 is to be forwarded) and an identifier of a second tunnel 305. The UPF 304 redirects packets received via the first tunnel 303 to the second tunnel 305 based on the forwarding indication and the identifier of the second tunnel 305. Via the second tunnel 305, the redirected DL packets arrive at a target base station 306, e.g. corresponding to target base station 203.

An example of the GTP-U packet 302 is given in figure 4.

Figure 4 shows a message 400 according to a GTP-U format for a redirected PDU.

The message 400 comprises a PDU 401, i.e. an IP (Internet Protocol) packet carrying the downlink data received by the source base station 301 to be redirected to the target base station 306 and for example buffered in the source base station 301.

The message 400 further comprises a GTP-U header 402 which identifies the UPF 304 as destination of the message 400. The message type is for example "G-PDU".

In addition, the message 400 comprises a GTP-U extension header 403. The GTP-U extension header 403 may indicate that the message 400 is for a redirection of a downlink packet, i.e. carries downlink data to be redirected. It also indicates the target TEID (Tunnelling Endpoint Identifier), i.e. an identifier of the target base station 306 as endpoint of the tunnel.

Thus, while the TEID included in the GTP-U header indicates the tunnel end point in the UPF 304 (in other words the component serving as relay in the redirection) as endpoint of the first tunnel 303, the TEID in the extension 403 indicates the tunnel endpoint in target base station 306 as endpoint of the second tunnel. In other words, the TEID in the extension 403 indicates the final destination of the data packets sent by the source base station 301.

The extension header 403 is for example added to all messages carrying the redirected PDUs from the source base station 301 to the UPF 304. The UPF 304 resends the PDU to the TEID identified by the TEID indicated in the extension header 403.

The message 400 further includes UDP (User Datagram Protocol)/IP header information 404.

The downlink data packets may be buffered at various stages of the redirection.

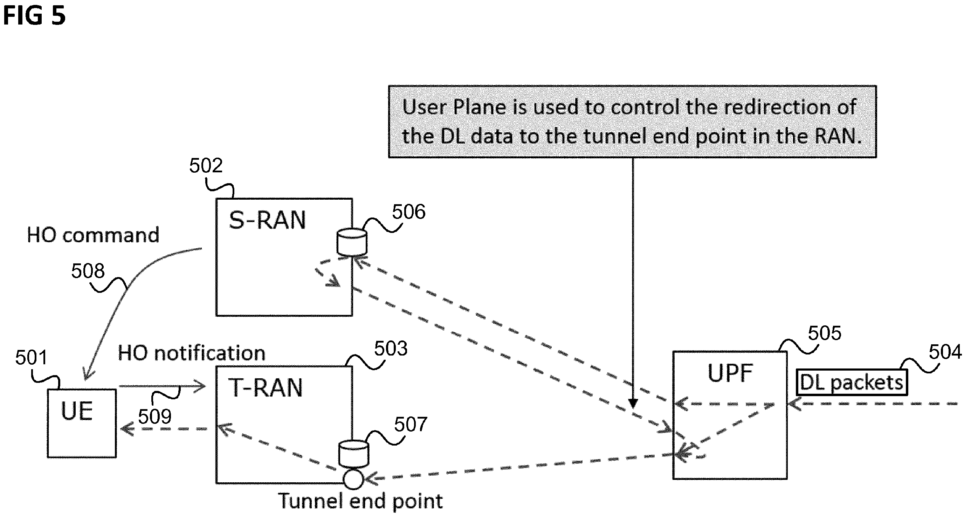

Figure 5 shows an example for a redirection with buffering in the source RAN component and the target RAN component.

Similarly to the example of figure 2, there is a handover of a UE 501 from a source RAN component 501 (e.g. a source base station) to a target RAN component 502 (e.g. a target base station) wherein redirection of downlink packets 504 is performed via a UPF 505.

A prerequisite for Handover preparation and execution is that the source RAN component 502 sends a handover command 508 to the UE 501. The source RAN component 502 then begins to buffer the incoming DL packets 504 in a source RAN component buffer 506.

The source RAN component 502 uses a redirection operation in the user plane to redirect the buffered packets to the UPF 505. The UPF 505 redirects the buffered packets to the target RAN component 503. The UPF 505 continues to send incoming DL packets 504 to the source RAN component 502.

The target RAN component buffers the redirected DL packets it receives from the UPF 505 in a target RAN component buffer 506.

The UE 501 then notifies the target RAN component 503 that it has handed over by means of a handover notification 509 and the target RAN component 503 begins to send the DL packets it has buffered to the UE 501.

The target RAN component 503 then sends a Patch Switch request to the core network (not shown) and the CN sends a notification to the UPF 505. The UPF 505 then begins to send incoming DL packets 504 directly to the target RAN component 503 (and thus to the UE 501).

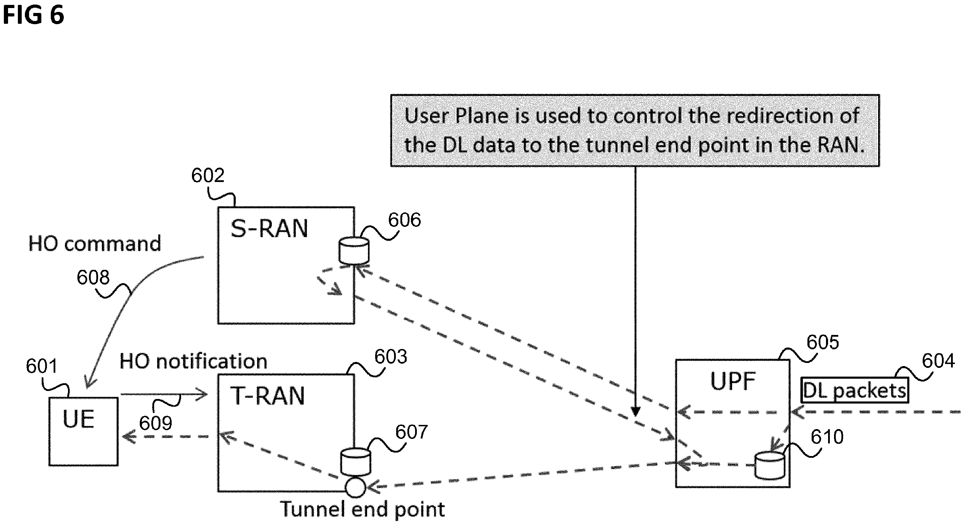

Figure 6 shows an example for a redirection with buffering in the source RAN component, the target RAN component and the UPF.

Similarly to the example of figure 5, there is a handover of a UE 601 from a source RAN component 601 (e.g. a source base station) to a target RAN component 602 (e.g. a target base station) wherein redirection of downlink packets 604 is performed via a UPF 605.

A prerequisite for Handover preparation and execution is that the source RAN component 602 sends a handover command 608 to the UE 601. The source RAN component 602 then begins to buffer the incoming DL packets 604 in a source RAN component buffer 606.

The source RAN component 602 uses a redirection operation in the user plane to redirect the buffered packets to the UPF 605. The UPF 605 redirects the buffered packets to the target RAN component 603 and begins to buffer incoming DL packets 604 in a UPF buffer 610. The target RAN component buffers the redirected DL packets it receives from the UPF 605 in a target RAN component buffer 607.

When the UPF 605 has sent the redirected packets it has received from the source RAN component 602, it continues the sending of packets to the target RAN component 603 with the packets from its own buffer 610.

The UE 601 then notifies the target RAN component 603 that it has handed over by means of a handover notification 609 and the target RAN component 603 begins to send the DL packets it has buffered to the UE 601.

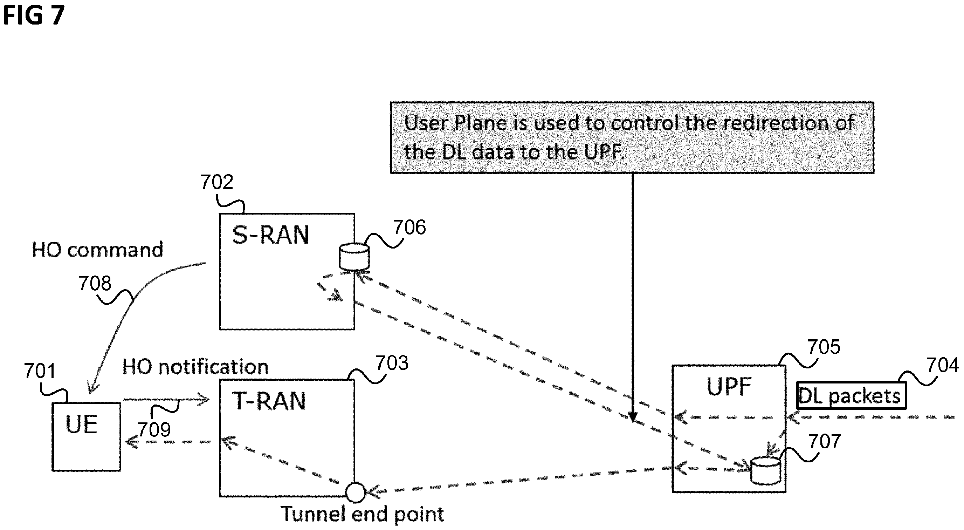

Figure 7 shows an example for a redirection with buffering in the source RAN component and the UPF.

Similarly to the example of figure 5, there is a handover of a UE 701 from a source RAN component 701 (e.g. a source base station) to a target RAN component 702 (e.g. a target base station) wherein redirection of downlink packets 704 is performed via a UPF 705.

A prerequisite for Handover preparation and execution is that the source RAN component 702 sends a handover command 708 to the UE 701. The source RAN component 702 then begins to buffer the DL packets in a source RAN component buffer 706.

The source RAN component 702 uses a redirection operation in the user plane to redirect the buffered packets to the UPF 705. The UPF 705 begins to buffer the redirected DL packets and incoming DL packets in a UPF buffer 707.

The UE 701 then notifies the target RAN component 703 that it has handed over by means of a handover notification 709. The target RAN component 703 sends a Patch Switch request to the CN (not shown) and the CN sends a notification to the UPF 705. The UPF 705 then begins to send the DL packets it has buffered to the target RAN component 703 (and thus to the UE 701).

In all three examples (redirection models) of figures 5, 6, 7 the source RAN component 502, 602, 702 buffers DL packets and forwards them to the UPF 505, 605, 705 (as otherwise the buffered packets would be lost). The difference in the redirection models is whether the UPF and/or T-RAN have a buffer too.
Example of figure 5:
   - The user plane redirection request contains the tunnel end point of the target RAN component 503.
   - The source RAN component 502 sends the buffered packets to the UPF 505 which does not buffer them but sends them to the target RAN component 503.
   - There is no buffer in the UPF for the redirected DL packets and the incoming DL packets.
   - Upon reception of the Path Switch notification from the target RAN component, the core network (e.g. SMF 107) indicates to the UPF 505 to switch the tunnel end point directly to the target RAN component. The Source RAN component 502 stops receiving packets at this point.
Example of figure 6:
   - The user plane redirection request contains the tunnel end point of the target RAN component 603.
   - The source RAN component 602 sends the buffered packets to the UPF 605, which does not buffer them but sends them to the target RAN component 603. The UPF 605 begins to buffer the incoming DL packets after reception of the first redirected packet from the source RAN component 602. The source RAN component 602 stops receiving incoming DL packets at this point.
   - Once the UPF 605 has sent all the redirected packets to the target RAN component 603, it begins to send the buffered packets from its own buffer to the target RAN component 603.
Example of figure 7:
   - The UPF 705 begins to buffer the incoming DL packets after reception of the first redirected packet from the source RAN component 702. The source RAN component 702 stops receiving DL packets at this point.
   - There is no tunnel end point in the UP redirection request.
   - Upon reception of the Path Switch notification from the target RAN component 702, the core network (e.g. SMF 107) indicates to the UPF 705 to start sending buffered packets to the target RAN component 703. At first the redirected packets from the source RAN component 702 are sent, followed by the packets buffered by UPF 705.

For handover cancellation, for the approach of figure 5, a similar HO cancel procedure as in an LTE EPS (Evolved Packet System) can be used. The source RAN component 502 receives incoming DL packets from the UPF 505 until the UPF sends an end marker and before the reception of the end marker the source RAN component 502 can send a handover cancellation to the target RAN component 503. In the approaches of figures 6 and 7, the source RAN component 602 does not receive incoming DL packets after it has redirected its buffered DL packets to the UPF 605. A mechanism may be implemented for the source RAN component 602 to notify the UPF 605 to switch back to the source RAN component 602 if the handover needs to be cancelled.

The mechanism described as described herein can be used to support handovers without interruption of data transmission (e.g. 0ms handover). In the approach of figure 5, as the source RAN component 502 receives the incoming DL packets until the end marker, the source RAN component 502 maysend the same DL data via a data radio bearer (DRB) of the source RAN component 502 and to the target RAN component 503 which can send the same data via its own data radio bearer. For the approaches of figures 6 and 7, such bicasting to the source RAN component 602, 702 and the target RAN component 603, 703 can be done in the UPF 605, 705.

In the following, an example is described in which the approaches described above are applied to a local UPF relocation or removal.

In a 5G communication system, a local UPF (I-UPF, Intermediate User Plane Function) may be used to provide access to a local data network. The I-UPF has a certain geographical service area. When a UE served by an I-UPF moves out of the I-UPF's service area, the I-UPF may need to be relocated, or removed from the PDU session. When a UE moves into the I-UPF's service area outside from any existing service area, the I-UPF may need to be inserted to the PDU session.

The I-UPF relocation, insertion or removal may need to be done at the time the UE is paged for DL data and user plane functionalities are being established for the UE. However, it may occur that there is no connectivity from the I-UPF (to be relocated or removed) to the RAN component where the UE receives the paging such that the I-UPF cannot forward downlink packets it may have buffered directly to the RAN component. In the following, examples are given which allow preventing that the buffered DL packets are lost when the I-UPF is removed or relocated by redirecting the buffered DL packets from the I-UPF.

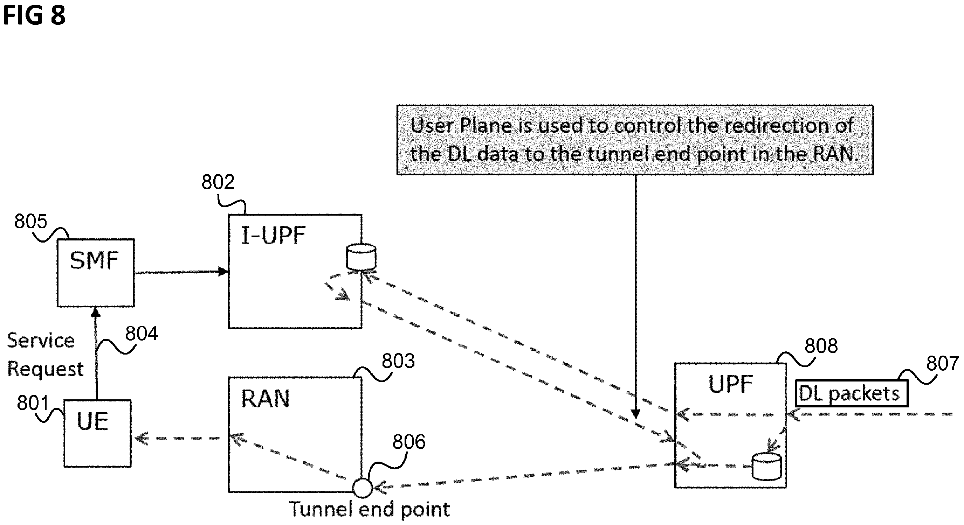

Figure 8 shows an example for a redirection of DL packets in case of an I-UPF removal.

An I-UPF 802 buffers incoming DL packets 807 for an UE 801 which it receives from an UPF 808. The UE 801 is paged via a RAN component 803. The UE 801 responds to the paging (indicating arrival of DL data for the UE 801) with a service request 804 to an SMF 805. The SMF 805 notifies the I-UPF 802 about the service request and an end point 806 of a tunnel from the I-UPF 802 to the RAN component 803.

The I-UPF 802 uses a redirection operation in the user plane to redirect the buffered DL packets to the UPF 808. The UPF 808 sends the redirected packets to the RAN component 803 and begins to buffer incoming DL packets 807.

When the UPF 808 has sent the redirected packets received from the I-UPF 802, it continues the transmission of DL packets to the RAN component 803 with the DL packets from its own buffer.

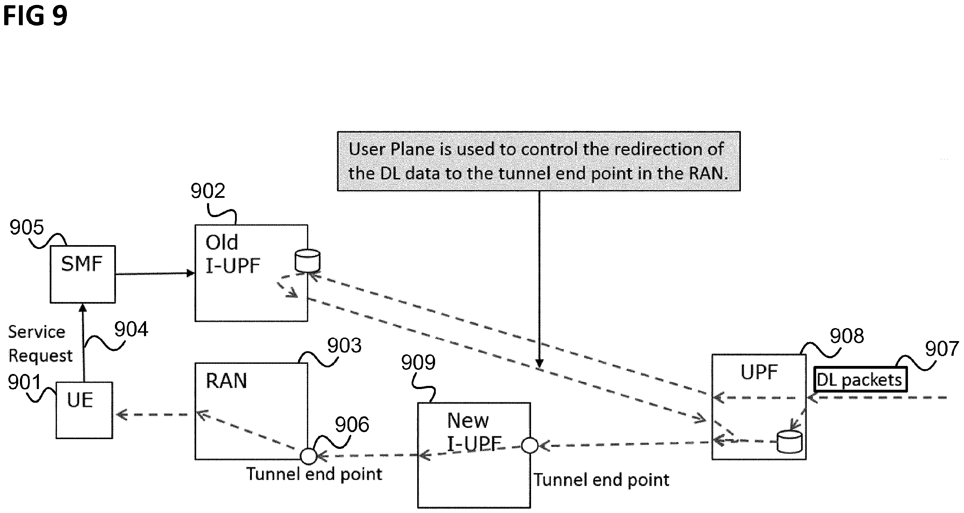

Figure 9 shows an example for a redirection of DL packets in case of an I-UPF relocation.

An I-UPF 902 buffers incoming DL packets 907 for an UE 901 which it receives from an UPF 908. The UE 901 is paged via a RAN component 903. The UE 901 responds to the paging (indicating arrival of DL data for the UE 901) with a service request 904 to an SMF 905. The SMF 905 allocates a new I-UPF 909 and notifies the (old) I-UPF 902 about the service request and an end point 906 of a tunnel from the (old) I-UPF 902 to the RAN component 903.

The (old) I-UPF 902 uses a redirection operation in user plane to redirect the buffered DL packets to the UPF 908. The UPF 908 sends the redirected packets to the new I-UPF 909 and begins to buffer incoming DL packets 907.

When the UPF 908 has sent the redirected packets received from the (old) I-UPF 902, it continues the transmission of DL packets to the new I-UPF 909 with the DL packets from its own buffer.

The approaches of figures 8 and figure 9 for I-UPF relocation and removal may for example be implied in case that the I-UPF acts as an Uplink Classifier (UL CL). The UL CL may provide access to a Data Network Access point identified by a DNAI (Data Network Access Identifier). In this case the connectivity to the DNAI can be provided only when the core network can insert in the user plane an UL CL with access to the DNAI. The area where the access to the DNAI can be provided is called DNAI service area. If the UE moves in idle mode outside the DNAI service area, the PDU session may involve an existing UL CL which cannot be connected to the RAN (N3) anymore. Since the connectivity to the SMF remains, the UE can be paged but there may not be connectivity between the RAN and the UL CL. In this case the UE cannot activate the User Plane (N3) to UL CL. The SMF removes the UL CL from the PDU session upon reception of Service Request from the UE, if the UE is outside the DNAI service area. The DL data is buffered in PSA (PDU Session Anchor), e.g. UPF 808, and the already buffered packets in the UL CL, e.g. I-UPF 802, are redirected back from UL CL, e.g. I-UPF 802, to PSA, e.g. UPF 808.

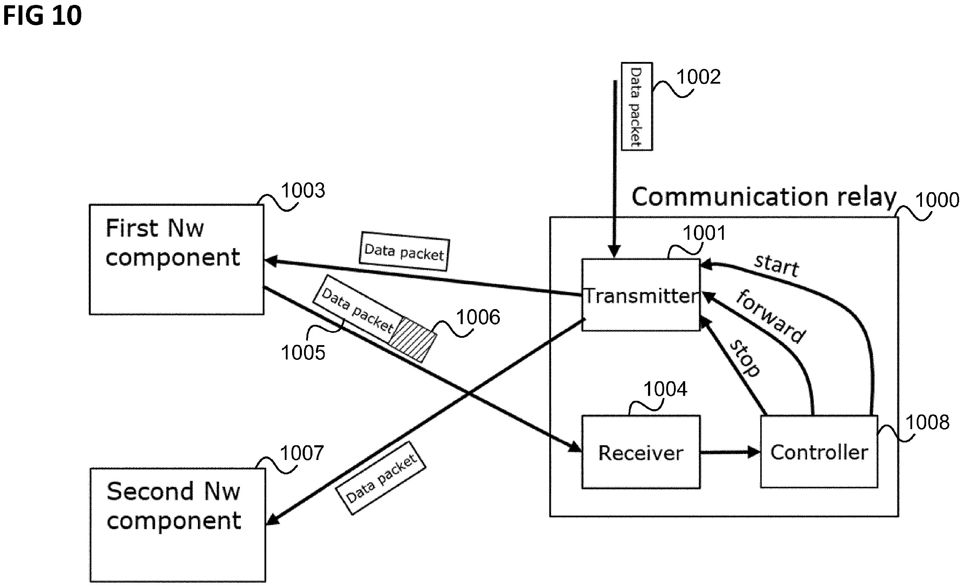

In summary, according to various embodiments, a communication relay is provided as illustrated in figure 10.

Figure 10 shows a communication relay 1000.

The communication relay 1000 comprises a transmitter 1001 for transmitting data packets 1002, which comprise user data to be transmitted to a mobile communication terminal, to a first network component 1003 of a mobile communication network and a receiver 1004 configured to receive a data packet 1005 from the first network component 1003, wherein the data packet 1005 comprises user data to be transmitted to the mobile communication terminal and an indication 1006 that the user data of the data packet 1005 is to be forwarded to a second network component 1007.

The communication relay 1000 further comprises a controller 1008 configured to, in response to the reception of the data packet from the first network component 1003,
- stop the transmitter 1001 from transmitting data packets 1002, which comprise user data to be transmitted to the mobile communication terminal, to the first network component 1002; and to
- control the transmitter 1001 to forward the user data of the data packet 1005 received from the first network component 1002 to the second network component 1007; and to
- control the transmitter 1001 to start transmitting data packets 1002, which comprise user data to be transmitted to the mobile communication terminal, to the second network component 1007.

According to various embodiments, in other words, a communication relay sends user data for a mobile communication terminal to a first network component until the first network component sends back some of the user data. For example, the communication relay sends a plurality of data packets to the first network component and the first network component sends back one of the data packets (possibly repacked or reformatted in any way). In response to the reception of the user data (or data packet) sent back, the first network component stops sending user data to the first network component, i.e. stops sending user data to the mobile communication terminal (e.g. a user equipment) via the first network component and begins sending user data for the mobile communication terminal to the second network component beginning with the user data sent back, followed by any further user data which it has received after receiving the user data sent back. The user data sent back can be seen as user data redirected by the first network component. The user data is downlink data which the communication relay receives from a communication partner of the mobile communication terminal, e.g. a second mobile communication network, a server computer (e.g. in the Internet) etc. The user data sent back includes an information (indication) indicating that the user data is to be forwarded to a second network component by the communication relay. This information may or may not include an identification of the second network component.

The approach of figure 10 may for example be used for a handover where it allows handover preparation to be simple and quick, thus ensuring a high success rate of the handover.

The approach of figure 10 may for example be applied for a handover in a mobile communication network deployment scenario where an Xn interface has not been deployed between the RAN nodes (e.g. base stations) and thus the Xn interface cannot be used for forwarding packets. It may for example be used when there is no need to relocate an AMF and/or an SMF during the Handover. It should be noted that in 5G the relocation of AMF/SMF is not considered to be an issue in virtualized stateless implementation. An AMF/SMF instance can be reallocated every time for each transaction. If there is a need to change the Data Centre during handover, the same AMF ID can be served from multiple data centres with a different set of Transport Network Layer associations to each data centre, and a change of the AMF ID is not needed. Even if the AMF ID needs to be changed during handover, it means only the 5G-GUTI (Globally Unique Temporary ID) needs to be updated to the UE after the handover.

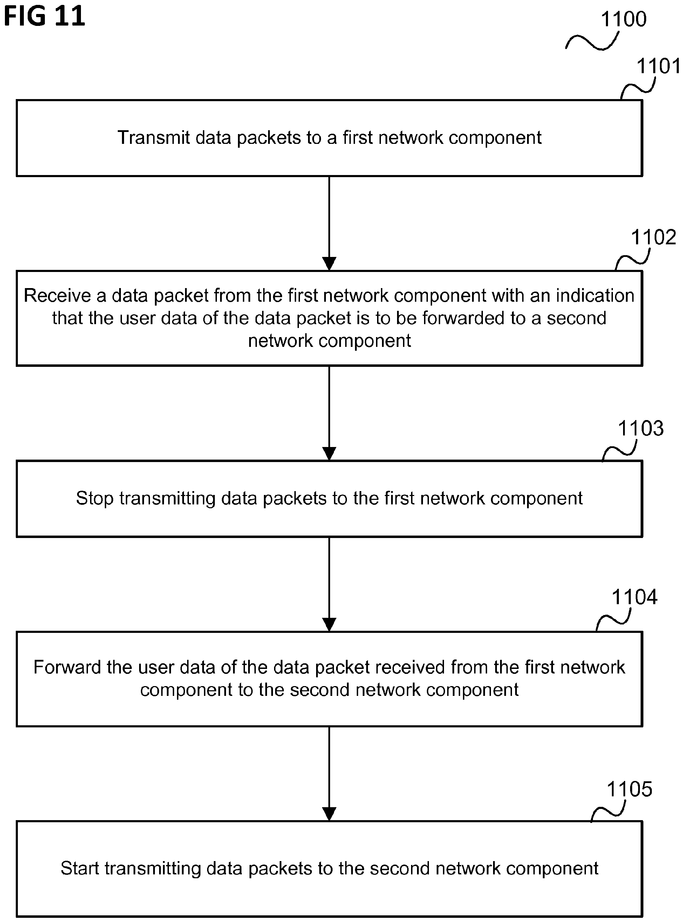

The communication relay for example carries out a method as illustrated in figure 11.

Figure 11 shows a flow diagram 1100 illustrating a method for redirecting data packets.

In 1101, data packets, which comprise user data to be transmitted to a mobile communication terminal, are transmitted to a first network component of a mobile communication network.

In 1102 a data packet is received from the first network component, wherein the data packet comprises user data to be transmitted to the mobile communication terminal and an indication that the user data of the data packet is to be forwarded to a second network component.

In response to the reception of the data packet from the first network component, in 1103, transmitting of data packets, which comprise user data to be transmitted to the mobile communication terminal, to the first network component is stopped and in 1104 the user data of the data packet received from the first network component is forwarded to the second network component and in 1105 transmitting data packets, which comprise user data to be transmitted to the mobile communication terminal, to the second network component, is started.

The components of the communication relay (e.g. the receiver, the controller and the transmitter) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hardwired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

While specific aspects have been described, it should be understood by those skilled in the art that various changes in form and detail may be made therein without departing from the scope of the aspects of this disclosure as defined by the appended claims. The scope is thus indicated by the appended claims.

## Claims

1. A communication relay comprising:
a transmitter for transmitting data packets, which comprise user data to be transmitted to a mobile communication terminal, to a first network component of a mobile communication network;
a receiver configured to receive a data packet from the first network component, wherein the data packet comprises user data to be transmitted to the mobile communication terminal and an indication that the user data of the data packet is to be forwarded to a second network component for a handover of the mobile communication terminal from the first network component to the second network component; and
a controller configured to, in response to the reception of the data packet from the first network component,
stop the transmitter from transmitting data packets, which comprise user data to be transmitted to the mobile communication terminal, to the first network component; and to control the transmitter to forward the user data of the data packet received from the first network component to the second network component;
and to control the transmitter to start transmitting data packets, which comprise user data to be transmitted to the mobile communication terminal, to the second network component
wherein the communication relay is a user plane function and wherein the indication is a tunnel endpoint identifier.

2. The communication relay of any one of claim 1, wherein forwarding the user data of the data packet comprises extracting the user data to be transmitted to the first network component from the data packet, to generate a forwarding data packet including the user data and to transmit the forwarding data packet to the second network component.

3. The communication relay of any one of claims 1 to 2, wherein the receiver is configured to receive the data packet from the first network component via a first communication tunnel and the received data packet comprises an identifier of an end point of the first tunnel in the communication relay.

4. The communication relay of claim 2 or 3, wherein the controller is configured to control the transmitter to forward the user data by means of a second tunnel.

5. The communication relay of claim 4, wherein the indication of the second network component is an identification of the endpoint of the second tunnel.

6. The communication relay of any one of claims 1 to 5. wherein the receiver is configured to receive the data packet from the first network component via the GTP-U protocol.

7. The communication relay of any one of claims 1 to 6, wherein the first network component is a first radio access network component and the second network component is a second radio access network component and the second radio access network component is the target of the handover of the mobile communication terminal.

8. The communication relay of any one of claims 1 to 6, wherein the first network component is a first user plane function to be removed and the second network component is a radio access network component or a second user plane function.

9. The communication relay of any one of claims 1 to 8, wherein the controller is configured to perform the controlling of the transmitter based on control instructions received from a control plane component of the mobile communication network.

10. The communication relay of any one of claims 1 to 9, wherein the controller is configured to, after stopping the transmitter from transmitting data packets to the first network component, control a memory of the communication relay to start buffering data packets to be transmitted to the mobile communication terminal received by the communication relay.

11. The communication relay of claim 10, wherein the controller is configured to control the transmitter to start transmitting the buffered data packets to the second network component in response to a corresponding command from a control plane component including the address of the second network component based on the address of the second network component.

12. A method for redirecting data packets, performed by a user plane function acting as communication relay, the method comprising
transmitting data packets, which comprise user data to be transmitted to a mobile communication terminal, to a first network component of a mobile communication network;
receiving a data packet from the first network component, wherein the data packet comprises user data to be transmitted to the mobile communication terminal and an indication that the user data of the data packet is to be forwarded to a second network component for a handover of the mobile communication terminal from the first network component to the second network component; in response to the reception of the data packet from the first network component,
stopping transmitting data packets, which comprise user data to be transmitted to the mobile communication terminal, to the first network component; and
forwarding the user data of the data packet received from the first network component to the second network component; and
start transmitting data packets, which comprise user data to be transmitted to the mobile communication terminal, to the second network component and wherein the indication is a tunnel endpoint identifier.

## Patentansprüche

1. Kommunikationsrelais, aufweisend:
einen Sender zum Übertragen von Datenpaketen, die an ein mobiles Kommunikationsendgerät zu übertragende Nutzdaten aufweisen, an eine erste Netzwerkkomponente eines mobilen Kommunikationsnetzwerks;
einen Empfänger, der eingerichtet ist, ein Datenpaket von der ersten Netzwerkkomponente zu empfangen, wobei das Datenpaket an das mobile Kommunikationsendgerät zu übertragende Nutzdaten und eine Angabe aufweist, dass die Nutzdaten des Datenpakets an eine zweite Netzwerkkomponente für ein Handover des mobilen Kommunikationsendgeräts von der ersten Netzwerkkomponente and die zweite Komponente weitergeleitet werden sollen; und
eine Steuereinrichtung, die eingerichtet ist, als Reaktion auf den Empfang des Datenpakets von der ersten Netzwerkkomponente
den Sender zu stoppen, Datenpakete, die an das mobile Kommunikationsendgerät zu übertragende Nutzdaten aufweisen, an die erste Netzwerkkomponente zu senden; und
den Sender zu steuern, die Nutzdaten des von der ersten Netzwerkkomponente empfangenen Datenpakets an die zweite Netzwerkkomponente weiterzuleiten
und den Sender zu steuern, mit dem Senden von Datenpaketen, die an das mobile Kommunikationsendgerät zu übertragende Nutzdaten aufweisen, an die zweite Netzwerkkomponente zu beginnen, wobei das Kommunikationsrelais eine Benutzerebenenfunktion ist und wobei die Angabe ein Tunnelendpunktidentifikator ist.

2. Das Kommunikationsrelais nach Anspruch 1, wobei das Weiterleiten der Nutzdaten des Datenpakets das Extrahieren der an die erste Netzwerkkomponente zu übertragenden Nutzdaten aus dem Datenpaket, das Erzeugen eines Weiterleitungsdatenpakets, das die Nutzdaten enthält, und das Übertragen des Weiterleitungsdatenpakets an die zweite Netzwerkkomponente aufweist.

3. Das Kommunikationsrelais nach einem der Ansprüche 1 bis 2, wobei der Empfänger eingerichtet ist, das Datenpaket von der ersten Netzwerkkomponente über einen ersten Kommunikationstunnel zu empfangen, und das empfangene Datenpaket einen Identifikator eines Endpunkts des ersten Tunnels im Kommunikationsrelais aufweist.

4. Das Kommunikationsrelais nach Anspruch 2 oder 3, wobei die Steuerung eingerichtet ist, den Sender so zu steuern, dass er die Nutzdaten über einen zweiten Tunnel weiterleitet.

5. Das Kommunikationsrelais nach Anspruch 4, wobei die Angabe der zweiten Netzwerkkomponente eine Identifikation des Endpunktes des zweiten Tunnels ist.

6. Das Kommunikationsrelais nach einem der Ansprüche 1 bis 5, wobei der Empfänger eingerichtet ist, das Datenpaket von der ersten Netzwerkkomponente über das GTP-U-Protokoll zu empfangen.

7. Das Kommunikationsrelais nach einem der Ansprüche 1 bis 6, wobei die erste Netzwerkkomponente eine erste Funkzugangsnetzwerkkomponente ist und die zweite Netzwerkkomponente eine zweite Funkzugangsnetzwerkkomponente ist und die zweite Funkzugangsnetzwerkkomponente das Ziel des Handovers des mobilen Kommunikationsendgeräts ist.

8. Das Kommunikationsrelais nach einem der Ansprüche 1 bis 6, wobei die erste Netzwerkkomponente eine erste zu entfernende Benutzerebenenfunktion ist und die zweite Netzwerkkomponente eine Funkzugangsnetzkomponente oder eine zweite Benutzerebenenfunktion ist.

9. Das Kommunikationsrelais nach einem der Ansprüche 1 bis 8, wobei die Steuereinrichtung eingerichtet ist, dass sie die Steuerung des Senders auf der Grundlage von Steueranweisungen durchführt, die von einer Steuerebenen-Komponente des mobilen Kommunikationsnetzes empfangen werden.

10. Das Kommunikationsrelais nach einem der Ansprüche 1 bis 9, wobei die Steuereinrichtung eingerichtet ist, nachdem sie den Sender gestoppt hat, Datenpakete an die erste Netzwerkkomponente zu senden, einen Speicher des Kommunikationsrelais zu steuern, mit dem Puffern von von dem Kommunikationsrelais empfangenen Datenpaketen zu beginnen, die an das mobile Kommunikationsendgerät gesendet werden sollen.

11. Das Kommunikationsrelais nach Anspruch 10, wobei die Steuereinrichtung eingerichtet ist, den Sender zu steuern, als Reaktion auf einen entsprechenden Befehl von einer Steuerebenen-Komponente, der die Adresse der zweiten Netzwerkkomponente enthält, basierend auf der Adresse der zweiten Netzwerkkomponente mit dem Senden der gepufferten Datenpakete an die zweite Netzwerkkomponente zu beginnen.

12. Verfahren zum Umleiten von Datenpaketen, durchgeführt von einer Benutzerebenenfunktion, die als Kommunikationsrelais agiert, wobei das Verfahren aufweist
Übertragen von Datenpaketen, die an ein mobiles Kommunikationsendgerät zu übertragende Nutzdaten aufweisen, an eine erste Netzwerkkomponente eines mobilen Kommunikationsnetzwerks
Empfangen eines Datenpakets von der ersten Netzwerkkomponente, wobei das Datenpaket an das mobile Kommunikationsendgerät zu übertragende Nutzdaten und eine Angabe, dass die Nutzdaten des Datenpakets an eine zweite Netzwerkkomponente für ein Handover des mobilen Kommunikationsendgeräts von der ersten Netzwerkkomponente and die zweite Netzwerkkomponente weitergeleitet werden sollen, aufweist;
in Reaktion auf den Empfang des Datenpakets von der ersten Netzwerkkomponente
Stoppen des Übertragens von Datenpaketen, die zu dem mobilen Kommunikationsendgerät zu übertragende Nutzdaten aufweisen, an die erste Netzwerkkomponente; und Weiterleiten der Nutzdaten des von der ersten Netzwerkkomponente empfangenen Datenpakets an die zweite Netzwerkkomponente; und
Beginnen des Übertragens von Datenpaketen, die an das mobile Kommunikationsendgerät zu übertragende Nutzdaten aufweisen, an die zweite Netzwerkkomponente und wobei die Angabe ein Tunnelendpunktidentifikator ist.

## Revendications

1. Relais de communication comprenant :
un émetteur destiné à transmettre des paquets de données qui comprennent des données d'utilisateur à transmettre à un terminal de communication mobile, à un premier composant de réseau d'un réseau de communication mobile ;
un récepteur configuré pour recevoir un paquet de données en provenance du premier composant de réseau, où le paquet de données comprend des données d'utilisateur à transmettre au terminal de communication mobile, et une indication selon laquelle les données d'utilisateur du paquet de données doivent être transférées à un second composant de réseau pour un transfert du terminal de communication mobile du premier composant de réseau, au second composant de réseau ; et
un contrôleur configuré, en réponse à la réception du paquet de données en provenance du premier composant de réseau,
pour faire cesser par l'émetteur la transmission des paquets de données qui comprennent des données d'utilisateur à transmettre au terminal de communication mobile, vers le premier composant de réseau ; et
pour commander l'émetteur afin de transférer les données d'utilisateur du paquet de données reçu en provenance du premier composant de réseau, au second composant de réseau ; et
pour commander l'émetteur afin de commencer la transmission des paquets de données qui comprennent des données d'utilisateur à transmettre au terminal de communication mobile, vers le second composant de réseau,
où le relais de communication est une fonction de plan d'utilisateur, et où l'indication est un identifiant de point d'extrémité de tunnel.

2. Relais de communication selon la revendication 1,
où le transfert des données d'utilisateur du paquet de données, comprend l'extraction du paquet de données, les données d'utilisateur à transmettre au second composant de réseau, afin de générer un paquet de données de transfert comprenant les données d'utilisateur, et de transmettre le paquet de données de transfert au second composant de réseau.

3. Relais de communication selon la revendication 1 ou 2,
où le récepteur est configuré pour recevoir le paquet de données en provenance du premier composant de réseau par l'intermédiaire d'un premier tunnel de communication, et le paquet de données reçu comprend un identifiant d'un point d'extrémité du premier tunnel dans le relais de communication.

4. Relais de communication selon la revendication 2 ou 3, où
le contrôleur est configuré pour commander l'émetteur afin de transférer les données d'utilisateur à l'aide d'un second tunnel.

5. Relais de communication selon la revendication 4, où l'indication du second composant de réseau est une identification du point d'extrémité du second tunnel.

6. Relais de communication selon l'une quelconque des revendications 1 à 5,
où le récepteur est configuré pour recevoir le paquet de données en provenance du premier composant de réseau par l'intermédiaire du protocole GTP-U.

7. Relais de communication selon l'une quelconque des revendications 1 à 6,
où le premier composant de réseau est un premier composant de réseau à accès radio, et le second composant de réseau est un second composant de réseau à accès radio, et le second composant de réseau à accès radio est la cible de transfert du terminal de communication mobile.

8. Relais de communication selon l'une quelconque des revendications 1 à 6,
où le premier composant de réseau est une première fonction de plan d'utilisateur à retirer, et le second composant de réseau est un composant de réseau à accès radio, ou une seconde fonction de plan d'utilisateur.

9. Relais de communication selon l'une quelconque des revendications 1 à 8,
où le contrôleur est configuré pour exécuter la commande de l'émetteur sur la base d'instructions de commande reçues en provenance d'un composant de plan de commande du réseau de communication mobile.

10. Relais de communication selon l'une quelconque des revendications 1 à 9,
où le contrôleur est configuré, après avoir fait cesser par l'émetteur la transmission des paquets de données vers le premier composant de réseau, pour commander à une mémoire du relais de communication, de commencer à tamponner les paquets de données à transmettre au terminal de communication mobile, reçus par le relais de communication.

11. Relais de communication selon la revendication 10, où le contrôleur est configuré pour commander à l'émetteur de commencer la transmission des paquets de données tamponnés, vers le second composant de réseau, en réponse à une commande correspondante en provenance d'un composant de plan de commande, comprenant l'adresse du second composant de réseau sur la base de l'adresse du second composant de réseau.

12. Procédé destiné à rediriger des paquets de données, exécuté par une fonction de plan d'utilisateur agissant en tant que relais de communication, le procédé comprenant
la transmission des paquets de données, qui comprennent des données d'utilisateur à transmettre à un terminal de communication mobile, à un premier composant de réseau d'un réseau de communication mobile ;
la réception d'un paquet de données en provenance du premier composant de réseau, où le paquet de données comprend des données d'utilisateur à transmettre au terminal de communication mobile, et une indication selon laquelle les données d'utilisateur du paquet de données doivent être transférées à un second composant de réseau pour un transfert du terminal de communication mobile du premier composant de réseau, au second composant de réseau ;
en réponse à la réception du paquet de données en provenance du premier composant de réseau,
la cessation de la transmission des paquets de données, qui comprennent des données d'utilisateur à transmettre au terminal de communication mobile, vers le premier composant de réseau ; et
le transfert des données d'utilisateur du paquet de données reçu en provenance du premier composant de réseau, au second composant de réseau ; et
l'initialisation de la transmission des paquets de données, qui comprennent des données d'utilisateur à transmettre au terminal de communication mobile, vers le second composant de réseau, et où l'indication est un identifiant de point d'extrémité de tunnel.
